(19) Europäisches Patentamt
European Patent Office
Office européen des brevets

(11) EP 4 574 885 A1

(12) EUROPEAN PATENT APPLICATION
published in accordance with Art. 153(4) EPC

(43) Date of publication:
**25.06.2025 Bulletin 2025/26**

(21) Application number: **23854950.5**

(22) Date of filing: **21.08.2023**

(51) International Patent Classification (IPC):
***C08G 65/40*** *(2006.01)*

(52) Cooperative Patent Classification (CPC):
**C08G 65/40; C08K 3/16; C08L 71/10**

(86) International application number:
**PCT/JP2023/030012**

(87) International publication number:
**WO 2024/038917 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.08.2022 JP 2022130888**

(71) Applicant: **Tosoh Corporation**
**Yamaguchi 746-8501 (JP)**

(72) Inventors:
- **TAKAHASHI, Ryohei**
  **Shunan-shi Yamaguchi 746-8501 (JP)**
- **IDATE, Hiroto**
  **Shunan-shi Yamaguchi 746-8501 (JP)**
- **MIYAZAKI, Takanori**
  **Shunan-shi Yamaguchi 746-8501 (JP)**

(74) Representative: **TBK**
**Bavariaring 4-6**
**80336 München (DE)**

# (54) HALOGENATED POLYMER AND METHOD FOR PRODUCING SAME

(57) The object of the present invention is to provide a halogenated polymer having excellent heat resistance and whiteness as compared with a conventional halogen-containing polymer. The present invention provides a halogenated polymer represented by the following formula (1), containing bromide ions, which has a bromide ion content of 1 to 2,000 ppm:

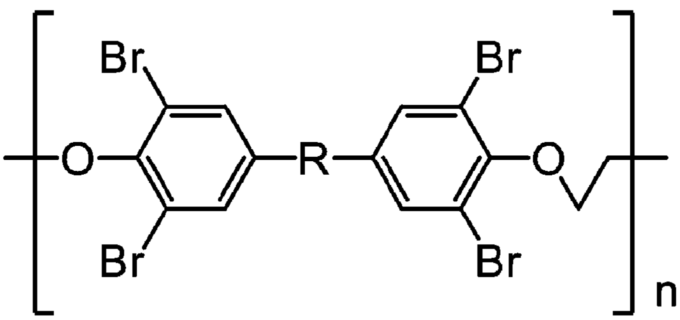

(1)

wherein R is a C1-C6 alkylene group, -S- or $-SO_2-$, and n is a real number.

EP 4 574 885 A1

## Description

### TECHNICAL FIELD

The present invention relates to halogenated polymer having high heat resistance, to be used for flame retardants, etc., and a method for producing it.

### BACKGROUND ART

Flame retardants are well known as an additive to impart flame retardancy to a resin when blended with the resin. For example, a compound having many halogen atoms has been widely used as a halogen-based flame retardant. Some low molecular weight halogen-based frame retardants (for example polybrominated biphenyls) are subjected to the RoHS directive due to their harmfulness. Thus, recent development of halogen-based flame retardants tends to shift toward high molecular weight compounds.

As a high molecular weight bromine-based flame retardant, for example, a polymer from tetrabromobisphenol A as a monomer has been known. Such a polymer may be one obtained by reacting tetrabromobisphenol A with a 1,2-dihaloethane in the presence of a base (Patent Documents 1 to 4).

Regarding the heat resistance of the high molecular wight bromine-based flame retardants, a decomposition temperature of about 180°C is disclosed, however, to improve flame retardancy, bromine-based flame retardants having a higher decomposition temperature have been desired. As a bromine-based flame retardant having a higher decomposition temperature, a halogen-containing polymer as disclosed in Patent Document 5 has been reported.

### PRIOR ART DOCUMENTS

### PATENT DOCUMENTS

Patent Document 1: JP-A-S51-117737
Patent Document 2: JP-B-S56-8809
Patent document 3: JP-A-S53-128656
Patent document 4: JP-B-S62-1973
Patent document 5: JP-A-2019-77857

### DISCLOSURE OF INVENTION

### TECHNICAL PROBLEM

The halogen-containing polymer in Patent Document 5 tends to be yellowish or grayish. If such a halogen-containing polymer is blended in a resin as a flame retardant, the color due to the flame retardant may sometimes remain. For example, a resin to be used for white goods appliances, etc. is required to be white, and thus a flame retardant to be blended for flame retardancy is also required to be white.

Under these circumstances, the object of the present invention is to provide a halogenated polymer having excellent heat resistance and whiteness as compared with the above halogen-containing polymer.

### SOLUTION TO PROBLEM

The present inventors have conducted extensive studies and as a result found that the above object can be achieved by the following invention, and accomplished the present invention.

That is, the present invention provides the following [1] to [7].

[1] A halogenated polymer represented by the following formula (1), containing bromide ions:

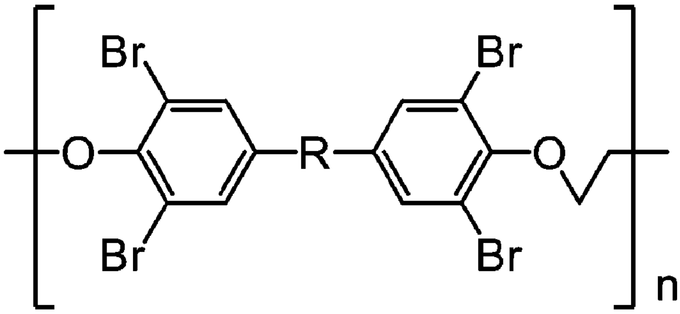

(1)

wherein R is a C1-C6 alkylene group, -S- or $-SO_2-$, and n is a real number, which has a bromide ion content of 1 to 2,000 ppm.

[2] The halogenated polymer according to [1], wherein a 3 wt% weight loss temperature is 370°C or higher at a temperature-raising rate of 10°C/min.

[3] The halogenated polymer according to [1] or [2], wherein a color difference D from white (R:G:B=255:255:255) of the halogenated polymer calculated based on the Euclidean distance of the following formula using a color difference meter, is 33 or less:

$$\text{color difference D} = \sqrt{(255-R)^2 + (255-G)^2 + (255-B)^2}$$

[4] The halogenated polymer according to any one of [1] to [3], which has an average primary particle size (D50) of 1 to 50 μm.

[5] A method for producing the halogenated polymer as defined in [1], which comprises heating a mixture containing a compound represented by the following formula (2), a compound represented by the following formula (3), a base, a radical scavenger and a solvent at 110 to 150°C with stirring:

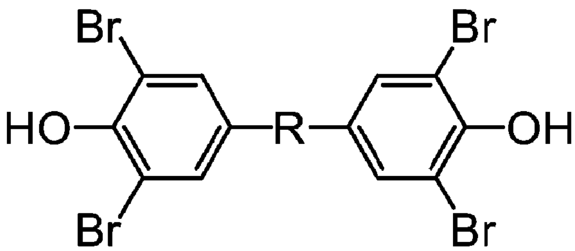

(2)

wherein R is a C1-C6 alkylene group, -S- or $-SO_2-$;

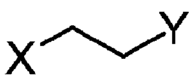

(3)

wherein X and Y are a halogen atom.

[6] The production method according to [5], wherein an amount of the radical scavenger used is 0.001 to 10 parts by mass per 100 parts by mass of the compound represented by the formula (2).

[7] The production method according to [5] or [6], wherein the radical scavenger is at least one member selected from the group consisting of a phenol-based radical scavenger, a quinone-based radical scavenger, a phosphite-based radical scavenger, an amine-based radical scavenger and a sulfur-based radical scavenger.

ADVANTAGEOUS EFFECTS OF INVENTION

The halogenated polymer of the present invention is excellent in heat resistance and whiteness. Thus, the halogenated polymer of the present invention has such effects as follows. That is, the operation temperature range within which the halogenated polymer is kneaded with a resin or molding operation is conducted is widened, and its applications as a flame retardant for a resin which the beauty in appearance is important are broadened.

DESCRIPTION OF EMBODIMENTS

Now, the present invention will be described in further detail below.

According to an aspect of the present invention, provided is a halogenated polymer represented by the following formula (1), containing bromide ions:

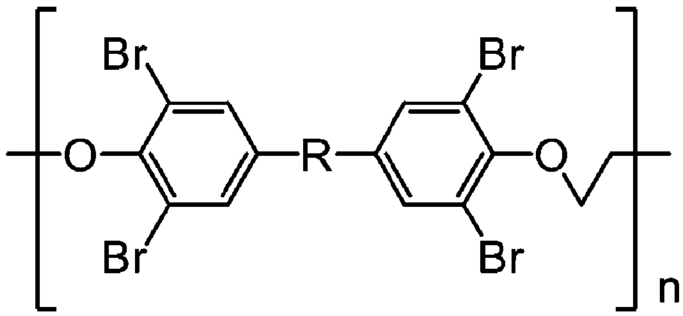

(1)

wherein R is a C1-C6 alkylene group, -S- or $-SO_2-$, and n is a real number, which has a bromide ion content of 1 to 2,000 ppm.

The terminal group of the halogenated polymer of the present invention is usually a 2-haloethyl group and/or a phenolic hydroxy group derived from the raw material monomer, and such a terminal group may be end-capped with a low reactive compound. The end-capping compound is not particularly limited and may, for example, be 4-bromophenol, 1,3,5-tribromophenol, pentabromophenol, benzyl chloride, a halogenated methyl or a halogenated benzene. The halogenated polymer of the present invention includes ones the terminal group of which is end-capped with the above compounds.

The C1-C6 alkylene group as R is not particularly limited and may, for example, be a methylene group, an ethylene group, a 2,2-propylene group, a 2,2-butylene group, a hexadiene group or a 1,1-cyclohexylene group.

R is preferably a 2,2-propylene group in view of excellent heat resistance.

In the formula (1), n represents an average number of repetition of the repeating units in the halogenated polymer and in the present invention, n is a real number.

This n is, in view of excellent heat resistance, preferably a real number of 4 to 50, more preferably a real number of 5 to 30, further preferably a real number of 6 to 20.

For example, when R is a 2,2-propylene group, the terminals are a 2-chloroethyl group and a phenolic hydroxy group, and n is 11, the theoretical average molecular weight of the halogenated polymer of the present invention is 6,368.

The halogenated polymer of the present invention is characterized in that it contains, as its component, bromide ions, and has a content of the bromide ions of 1 to 2,000 ppm based on the mass of the halogenated polymer (the mass including the bromide ions).

The bromide ions are present as dispersed in the halogenated polymer as a bromide salt. The bromide salt may be one formed of a bromide ion and a cation derived from a base commonly used for production of the halogenated polymer, and more specifically may, for example, be lithium bromide, sodium bromide or potassium bromide.

The halogenated polymer of the present invention has, by satisfying the requirements, such effects as improved heat resistance and improved whiteness. These effects are estimated to be due to influences of the bromide ion content over the heat resistance and whiteness.

The bromide ion content is preferably 1 to 1,800 ppm, more preferably 10 to 1,500 ppm, further preferably 20 to 1,200 ppm, based on the mass of the halogenated polymer (the mass including the bromide ions), whereby the halogenated polymer has improved heat resistance and whiteness and has a small average primary particle size (D50).

The bromide ion content may be measured for example by solvent extraction and ion chromatography, although the measurement method is not particularly limited. The measurement method is described in further detail in Examples.

The halogenated polymer of the present invention preferably has a higher weight loss temperature in view of high heat resistance. More specifically, the halogenated polymer of the present invention has, in view of excellent heat resistance, a 3 wt% weight loss temperature of preferably 370°C or higher, more preferably 370°C to 400°C at a temperature-raising rate of 10°C/min.

The 3 wt% weight loss temperature may be measured by means of a conventionally known thermal analyzer. The thermal analyzer is not particularly limited and may, for example, be a thermogravimetric/differential thermal analysis (TG-DTA) analyzer.

In the present invention, the heat weight loss temperature was measured by means of ThermoPlus TG8120 manufactured by Rigaku Corporation, using an aluminum container, using about 10 mg of a sample, in the air atmosphere at 10°C/min. The measurement was conducted in accordance with the apparatus manual and JIS K7120-1987.

Particularly for resins to be processed at high temperature, a flame retardant is required to have excellent heat

resistance at higher temperature. The halogenated polymer of the present invention has excellent heat resistance as described above and is therefore expected to contribute to an improvement of the quality stability and an improvement of the productivity, as a flame retardant for resins to be processed at a temperature in the vicinity of 250 to 300°C.

A flame retardant such as the halogenated polymer of the present invention is required to have a small primary particle size. This is considered to be due to the following effects. That is, the smaller the primary particle size is, the more the dispersibility of the flame retardant in the resin improves, and thus the higher the possibility of the reaction of the flame retardant with combustible gasses and oxygen, etc., when the resin burns, increases (that is, the possibility of development of the frame retardancy effect increases) (source: Study of flame retardancy, introduction (Nan-nengaku Nyumon) Protect your life and property from fire, edited by KITANO Masaru, The Chemical Daily Co., Ltd.).

The halogenated polymer of the present invention has remarkable unexpected effects such that it has a very small primary particle size (average primary particle size (D50)) as compared with a known halogen-containing polymer and thus is excellent in dispersibility in a resin. The halogenated polymer of the present invention is expected to have very remarkable effects which are not achieved by a known halogen-containing polymer that it can impart very high flame retardancy to a resin, based on the above effects of excellent dispersibility.

It is estimated that there is a correlation between the bromide ion content and the average primary particle size (D50) of the halogenated polymer of the present invention.

That is, with the halogenated polymer of the present invention, which has a low bromide ion content, formation of irregular shaped polymer primary particles can be suppressed and as a result, the average primary particle size (D50) can be made small. Further, it is also estimated that on the contrary, the average primary particle size (D50) of the halogenated polymer of the present invention can be made small and thus, it is possible to prevent the bromide ions from remaining in the interior of the halogenated polymer and as a result, the bromide ion content can be made low.

The halogenated polymer of the present invention has an average primary particle size (D50) of preferably 1 to 50 μm, more preferably 2 to 30 μm, further preferably 3 to 15 μm, in view of excellent dispersibility in a resin, although it is not particularly limited.

The method of measuring the average primary particle size (D50) is not particularly limited and may, for example, be laser diffraction/scattering method, imaging method, sedimentation method, electrical resistance method, electron microscope method, specific surface area method or sieving method. Among them, laser diffraction/scattering method or imaging method is preferred, and laser diffraction/scattering method is more preferred. Among them, the measurement method by laser diffraction/scattering method is described in further detail in Examples.

The halogenated polymer of the present invention has, with a view to obtaining higher heat resistance, a weight average molecular weight as calculated as standard polystyrene measured by gel permeation chromatography, of preferably 4,000 or more, more preferably 8,000 or more, further preferably 11,000 or more.

The halogenated polymer of the present invention has, with a view to obtaining higher heat resistance, a ratio of the weight average molecular weight (Mw) to the number average molecular weight (Mn), as calculated as standard polystyrene measured by gel permeation chromatography, that is Mw/Mn, of preferably 1.0 to 4.0, more preferably 1.0 to 3.0, further preferably 1.0 to 2.0.

The method and the conditions for measuring the weight average molecular weight of the halogenated polymer of the present invention by gel permeation chromatography are in accordance with ISO 16014-3:2012 (JIS K7252-3:2016). The method and the conditions are described in further detail in Examples.

The halogenated polymer of the present invention has, in that high flame retardancy can be expected, a bromine content of preferably 53 to 60 wt%, more preferably 54 to 60 wt%.

The bromine content (wt%) of the halogenated polymer of the present invention may be determined by combustion ion chromatography, although the measurement method is not particularly limited. A specific analysis method and analysis conditions of the combustion ion chromatography are described in IEC 62321-3-2.

The halogenated polymer of the present invention may be produced, for example, by heating a mixture containing a compound represented by the following formula (2), a compound represented by the following formula (3), a base, a radical scavenger and a solvent, at 110 to 150°C with stirring, although its production is not particularly limited:

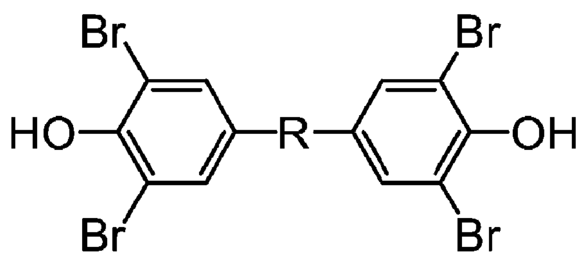

(2)

wherein R is a C1-C6 alkylene group, -S- or $-SO_2-$;

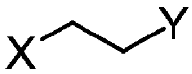

(3)

wherein X and Y are a halogen atom.

The compound represented by the formula (2) is not particularly limited and may, for example, be tetrabromobisphenol A, tetrabromobisphenol F, or bis(4'-hydroxy-3',5'-dibromophenyl)sulfone. Among them, preferred is tetrabromobisphenol A, with a view to obtaining the halogenated polymer having excellent heat resistance.

In the production method of the present invention, the halogen atom as X and Y is not particularly limited and may, for example, be chlorine, bromine or iodine. Among them, preferred is chlorine, with a view to obtaining the halogenated polymer having excellent heat resistance.

The compound represented by the formula (3) is not particularly limited and may, for example, be dichloroethane, dibromoethane, diiodoethane, 1-bromo-2-chloroethane, 1-chloro-2-iodoethane or 1-bromo-2-iodoethane. Among them, with a view to obtaining the halogenated polymer having excellent whiteness, preferred is dichloroethane or dibromoethane, more preferred is dichloroethane.

In the production method of the present invention, the base is not particularly limited and may, for example, be lithium hydroxide, potassium hydroxide, sodium hydroxide, cesium hydroxide, lithium hydrogencarbonate, potassium hydrogencarbonate, sodium hydrogencarbonate, cesium hydrogencarbonate, lithium carbonate, potassium carbonate, sodium carbonate, cesium carbonate, calcium hydroxide, strontium hydroxide, or barium hydroxide. Among them, with a view to obtaining a halogenated polymer having excellent heat resistance, preferred is sodium carbonate, potassium carbonate, sodium hydrogencarbonate or potassium hydrogencarbonate, and more preferred is potassium carbonate.

In the production method of the present invention, the solvent is not particularly limited so long as it does not react with the substrates and may, for example, be an aprotic polar solvent.

The aprotic polar solvent is not particularly limited and may, for example, be tetrahydrofuran, dioxane, pyridine, N-methylpyrrolidone, propylene carbonate, dimethylacetamide, dimethylformamide or dimethyl sulfoxide. Among them, with a view to obtaining a halogenated polymer having excellent heat resistance, preferred is N-methylpyrrolidone, dimethylacetamide, dimethylformamide or dimethyl sulfoxide.

In the production method of the present invention, the reaction temperature is within a range of 110 to 150°C, and with a view to obtaining the halogenated polymer having excellent whiteness, it is preferably within a range of 120 to 145°C.

The production method of the present invention may be conducted any of under reduced pressure, under normal pressure and under elevated pressure, and with a view to obtaining the halogenated polymer having excellent heat resistance, conducted preferably under normal pressure or under elevated pressure.

The atmosphere under which the production method of the present invention is conducted is not particularly limited and may, for example, be an air atmosphere, a nitrogen atmosphere or an argon atmosphere.

In the production method of the present invention, a phase transfer catalyst may be used in combination. The phase transfer catalyst is not particularly limited and may, for example, be a quaternary ammonium salt, a phosphonium salt or a crown ether. More specifically, it may, for example be, tetramethylammonium chloride, tetraethylammonium chloride, tetrabutylammonium chloride, tetrabutylammonium bromide, tetrabutylammonium bisulfate, benzyltrimethylammonium chloride, benzyltriethylammonium chloride, benzyltriethylammonium bromide, benzyltriethylammonium iodide, benzyltributylammonium chloride, benzyltributylammonium bromide, decyltrimethylammonium bromide, hexadecyltrimethylammonium chloride, hexadecyltrimethylammonium bromide, methyltrioctylammonium chloride, benzyldimethyltetradecylammonium chloride, ethylhexadecyldimethylammonium bromide, tetrabutylphosphonium bromide, tetraethylphosphonium hexafluorophosphate, tributyldodecylphosphonium bromide, tributylhexadecylphosphonium bromide, tetraethylphosphonium bromide, hexadecyltributylphosphonium bromide, benzyltriphenylphosphonium chloride, 12-crown-4-ether, 15-crown-5-ether, 18-crown-6-ether, benzo-12-crown-4-ether, benzo-15-crown-5-ether, dibenzo-18-crown-6-ether, dicyclohexyl-18-crown-6-ether, dibenzo-24-crown-8-ether, dicyclohexyl-24-crown-8-ether, 1-aza-15-crown-5-ether or 1-aza-18-crown-6-ether.

The production method of the present invention may be conducted continuously or by batch.

In the production method of the present invention, the polymerization reaction is conducted preferably in a non-aqueous system, whereby a halogenated polymer having more excellent whiteness will be obtained. The method of conducting the polymerization reaction in a non-aqueous system is not particularly limited and may, for example, be a method of using a dehydrated solvent, a method of dehydrating the polymerization reaction system with a dehydrating agent, or a method of not using raw materials which may generate water during the reaction. The dehydrating agent is not particularly limited and may, for example, be molecular sieves or zeolite.

The non-aqueous system is preferably such that the water concentration during the polymerization reaction system is 1,000 ppm or less, more preferably 500 ppm or less, further preferably 200 ppm or less.

The radical scavenger is not particularly limited and may, for example, be at least one radical scavenger selected from the group consisting of a phenol-based radical scavenger, a quinone-based radical scavenger, a phosphite-based radical scavenger, an amine-based radical scavenger and a sulfur-based radical scavenger. More specifically, it may, for

example, be 4-methoxyphenol, 6-tert-butyl-4,6-dimethylphenol, 2,6-di-tert-butylphenol, 2-tert-butyl-4-methoxyphenol, 4-tert-butylphenol, 2,6-di-tert-butylphenol, 2,6-di-tert-butyl-p-cresol (another name: dibutylhydroxytoluene), 2,2'-methylenebis(4-methyl-6-tertbutylphenol), 2,2'-methylenebis(4-ethyl-6-tertbutylphenol), 3,6-dihydroxybenzonorbornane, 2,2'-methylenebis(6-cyclohexyl-p-cresol), hydroquinone, tert-butylhydroquinone, 2,5-di-tert-butylhydroquinone, 1,4-benzoquinone, 2-tert-butyl-1,4-benzoquinone, 4-tert-butylcatechol, pentaerythritoltetrakis[3-(3,5-di-tert-butyl-4-hydroxyphenyl)prorionate], diphenylamine, N,N-diethylhydroxylamine, ammonium nitrosophenylhydroxylamine, 2,2,6,6-tetramethylpiperidin-1-oxyl, 2-benzimidazolethiol, phenothiazine, didodecyl 3,3'-thiodipropionate, dioctadecyl 3,3'-thiodipropionate, triethyl phosphite, trihexyl phosphite, tris(1,1,1-hexafluoro-2-propyl) phosphite, triphenyl phosphite, tris(2-methylphenyl) phosphite, tris(4-methylphenyl) phosphite, tris(4-nonylphenyl) phosphite, pentaerythritolbis(2,4-di-tert-butylphenyl phosphite) or tris(2,4-di-tert-butylphenyl) phosphite.

In the production method of the present invention, the mixing ratio of the compound represented by the formula (3) to the compound represented by the formula (2) is such that the compound represented by the formula (3) is preferably 0.8 to 2.0 parts by mole, more preferably 1.0 to 1.8 parts by mole, further preferably 1.2 to 1.5 parts by mole, per 1 part by mole of the compound represented by the formula (2).

In the production method of the present invention, the amount of the base used is, per 1 part by mole of the compound represented by the formula (3), preferably 0.8 to 2.5 parts by mole, more preferably 0.9 to 2.0 parts by mole, further preferably 1.0 to 1.8 parts by mole.

In the production method of the present invention, the amount of the radical scavenger used is, per 100 parts by mass of the compound represented by the formula (2), preferably 0.001 to 10 parts by mass, more preferably 0.005 to 8 parts by mass, further preferably 0.01 to 5 parts by mass.

In the production method of the present invention, the amount of the solvent used is, per 100 parts by mass of the compound represented by the formula (2), preferably 200 to 2,000 parts by mass, more preferably 250 to 900 parts by mass, further preferably 300 to 700 parts by mass.

The halogenated polymer of the present invention can impart flame retardancy to a resin when blended with the resin.

The resin is not particularly limited and may, for example, be polyethylene, polypropylene, polyvinyl chloride, polystyrene, polyvinyl acetate, poly(vinyl chloride/vinyl acetate), polyurethane, an acrylonitrile/butadiene/styrene resin, an acrylic resin, a phenolic resin, an epoxy resin, a melamine resin, a urea resin, a polyester resin, an alkyd resin, polyurea, polyimide, polyamide, polyacetal, polycarbonate, modified polyphenylene ether, polyethylene terephthalate, polybutylene terephthalate, cyclic polyolefin, polyphenylene sulfide, polytetrafluoroethylene, polysulfone, polyethersulfone, polyether ether ketone or polyamideimide.

The amount of the halogenated polymer of the present invention to be mixed with the resin is, per 100 parts by mass of the resin, preferably 5 to 30 parts by mass, more preferably 10 to 28 parts by mass, further preferably 12 to 25 parts by mass.

The halogenated polymer of the present invention can impart flame retardancy to fibers by impregnating the fibers with the polymer.

Such fibers are not particularly limited and may, for example, be polyethylene, polypropylene, polyvinyl chloride, acrylic, modacrylic, acrylate, acetate, rayon, melamine, polyurethane, polyimide, polyamide, polyacetal, polyester, polylactic acid, polyarylate, polyphenylene sulfide, or polyether ester fibers.

## EXAMPLES

Now, the present invention will be described in further detail with reference to Examples. However, it should be understood that the present invention is by no means restricted to such specific Examples.

### [Weight loss temperature measurement]

The weight loss temperature was measured under the following conditions as an index to the thermal stability of the halogenated polymer.

Analysis apparatus: ThermoPlus TG8120 manufactured by Rigaku Corporation

Measurement conditions: temperature raised at a rate of 10°C/min in the air using 10 mg of sample.

### [Weight average molecular weight measurement]

The molecular weight (weight average molecular weight) of the halogenated polymer was measured under the following conditions.

Analysis method: gel permeation chromatography
Analysis apparatus: HLC-8320GPC manufactured by Tosoh Corporation
Eluent: tetrahydrofuran
Measurement temperature: 40°C
Detector: UV detector
Molecular weight standard: polystyrene

[Bromide ion content measurement]

0.2 g of the halogenated polymer and 10 g of ultrapure water were mixed to conduct permeation extraction of bromide ions over a period of 1 hour. The mixture was subjected to centrifugal separation (2800 ppm, 30 minutes) to separate the aqueous layer. The obtained aqueous layer was made to pass through a pretreatment cartridge (TOYOPAC IC-SP M manufactured by Tosoh Corporation) and subjected to ion chromatography to measure the halogenated ion concentration, thereby to calculate the bromide ion content. The bromide ion concentration was calculated by absolute calibration method.

Measurement apparatus: IC-2010 manufactured by Tosoh Corporation
Column for analysis: TSKgel SuperIC-Anion HS
Guard column: TSKguardcolumn SuperIC-A HS
Eluent: 7.5 mmol/L aqueous sodium hydrogen carbonate solution + 0.8 mmol/L aqueous sodium carbonate solution
Flow rate: 1.5mL/min
Column temperature: 40°C
Injection amount: 30 μL
Suppressor gel: TSKgel suppress IC-A
Detection: Electric conductivity

[Average primary particle size (D50) Measurement]

The average primary particle size of the halogenated polymer subjected to ultrasonic dispersion in the following solvent was measured under the following conditions.

Analysis method: laser diffraction/scattering particle size distribution measurement
Measurement apparatus: MICROTRAC MT3300EXII manufactured by MicrotracBEL
Measurement conditions: wet
Solvent: water

[Chromaticity measurement, evaluation of color difference D from white]

Using 2.0 g of the halogenated polymer, the chromaticity RGB of the halogenated polymer based on RGB color model was measured using the following color difference meter.

Analysis method: color difference meter method
Measurement apparatus (color difference meter): Pico Mobile Color Picker manufactured by SOFTWARE Too

(RGB R=Red, G=Green, B=Blue).

Regarding the chromaticity RGB measured, the color difference D from white (R:G:B=255:255:255) was calculated. The color difference D was calculated based on the Euclidean distance of the following formula:

$$\text{color difference D} = \sqrt{(255-R)^2 + (255-G)^2 + (255-B)^2}$$

A smaller color difference D indicates a smaller difference in chromaticity from white (R:G:B=255:255:255) and a color of the measurement sample closer to white.

Example 1

Into a 300 mL glass eggplant flask, 20.0 g (37 mmol) of tetrabromobisphenol A, 4.7 g (48 mmol) of dichloroethane, 6.4 (46 mmol) of potassium carbonate, 0.4 g (1.8 mmol) of dibutylhydroxytoluene (BHT) and 30 mL of dimethylformamide were charged and heated to 140°C with stirring for mixing. The mixture was stirred at 140°C for 2 hours and air-cooled to room temperature. Water was added to the reaction liquid to precipitate solids. The precipitated solids were collected by filtration, washed with water and dried to obtain a white solid halogenated polymer with a yield of 94%.

The obtained halogenated polymer was subjected to [Weight loss temperature measurement], [Weight average molecular weight measurement], [Bromide ion content measurement], [Average primary particle size (D50) measurement] and [Chromaticity measurement, evaluation of color difference D from white].

The weight average molecular weight was 12,000. The bromide ion content was 220 ppm. The average particle size was 8 μm. The color difference D from white was 29. The results are shown in Table 1.

Example 2

The same operation as in Example 1 was conducted except that 0.2 g (1.3 mmol) of 4-tert-butylphenol (PTBP) was used instead of 0.4 g (1.8 mmol) of BHT to obtain a white solid halogenated polymer with a yield of 93%. Evaluation results of the obtained halogenated polymer are shown in Table 1.

Example 3

The same operation as in Example 1 was conducted except that 0.02 g (0.01 mmol) of tris(2,4-di-tert-butylphenyl) phosphite (TDBPP) was used instead of 0.4 g (1.8 mmol) of BHT to obtain a white solid halogenated polymer with a yield of 95%. Evaluation results of the obtained halogenated polymer are shown in Table 1.

Example 4

The same operation as in Example 1 was conducted except that 0.02 g (0.18 mmol) of hydroquinone (HQ) was used instead of 0.4 g (1.8 mmol) of BHT to obtain a white solid halogenated polymer with a yield of 96%. Evaluation results of the obtained halogenated polymer are shown in Table 1.

Example 5

The same operation as in Example 1 was conducted except that 0.02 g (0.16 mmol) of 4-methoxyphenol (40MeP) was used instead of 0.4 g (1.8 mmol) of BHT to obtain a white solid halogenated polymer with a yield of 96%. Evaluation results of the obtained halogenated polymer are shown in Table 1.

Example 6

The same operation as in Example 1 was conducted except that 0.02 g (0.16 mmol) of 4-tert-butylphenol (PTBP) was used instead of 0.4 g (1.8 mmol) of BHT to obtain a white solid halogenated polymer with a yield of 96%. Evaluation results of the obtained halogenated polymer are shown in Table 1.

Example 7

The same operation as in Example 1 was conducted except that 0.02 g (0.12 mmol) of 4-tert-butylcatechol (4tBuC) was used instead of 0.4 g (1.8 mmol) of BHT to obtain a white solid halogenated polymer with a yield of 97%. Evaluation results of the obtained halogenated polymer are shown in Table 2.

Example 8

The same operation as in Example 1 was conducted except that 0.02 g (0.12 mmol) of tert-butylhydroquinone (TBHQ) was used instead of 0.4 g (1.8 mmol) of BHT to obtain a white solid halogenated polymer with a yield of 97%. Evaluation results of the obtained halogenated polymer are shown in Table 2.

Example 9

The same operation as in Example 1 was conducted except that 0.02 g (0.11 mmol) of 6-tert-butyl-4,6-dimethylphenol (6tBu4,6DMP) was used instead of 0.4 g (1.8 mmol) of BHT to obtain a white solid halogenated polymer with a yield of 97%. Evaluation results of the obtained halogenated polymer are shown in Table 2.

Example 10

The same operation as in Example 1 was conducted except that 0.02 g (0.10 mmol) of 2,6-di-tert-butylphenol (2,6DtBuP) was used instead of 0.4 g (1.8 mmol) of BHT to obtain a white solid halogenated polymer with a yield of 97%. Evaluation results of the obtained halogenated polymer are shown in Table 2.

Example 11

The same operation as in Example 1 was conducted except that 0.02 g (0.11 mmol) of 2-tert-butyl-4-methoxyphenol (2tBu4OMeP) was used instead of 0.4 g (1.8 mmol) of BHT to obtain a white solid halogenated polymer with a yield of 96%. Evaluation results of the obtained halogenated polymer are shown in Table 2.

Example 12

The same operation as in Example 1 was conducted except that 0.02 g (0.09 mmol) of 2,5-di-tert-butylhydroquinone (2,5DtBuHQ) was used instead of 0.4 g (1.8 mmol) of BHT to obtain a white solid halogenated polymer with a yield of 97%. Evaluation results of the obtained halogenated polymer are shown in Table 2.

Example 13

The same operation as in Example 1 was conducted except that 0.02 g (0.11 mmol) of 3,6-dihydroxybenzonorbornane (3,6DHN) was used instead of 0.4 g (1.8 mmol) of BHT to obtain a white solid halogenated polymer with a yield of 96%. Evaluation results of the obtained halogenated polymer are shown in Table 3.

Example 14

The same operation as in Example 1 was conducted except that 0.02 g (0.05 mmol) of 2,2'-methylenebis(6-cyclohexyl-p-cresol) (2,2'MB(6CHPC)) was used instead of 0.4 g (1.8 mmol) of BHT to obtain a white solid halogenated polymer with a yield of 96%. Evaluation results of the obtained halogenated polymer are shown in Table 3.

Example 15

The same operation as in Example 1 was conducted except that 0.02 g (0.04 mmol) of pentaerythritoltetrakis [3-(3,5-di-tert-butyl-4-hydroxyphenyl)propionate] (PETP) was used instead of 0.4 g (1.8 mmol) of BHT to obtain a white solid halogenated polymer with a yield of 96%. Evaluation results of the obtained halogenated polymer are shown in Table 3.

Example 16

The same operation as in Example 1 was conducted except that 0.02 g (0.19 mmol) of 1,4-benzoquinone (1,4BQ) was used instead of 0.4 g (1.8 mmol) of BHT to obtain a white solid halogenated polymer with a yield of 96%. Evaluation results of the obtained halogenated polymer are shown in Table 3.

Example 17

The same operation as in Example 1 was conducted except that 0.02 g (0.12 mmol) of 2-tert-butyl-1,4-benzoquinone (2tBu1,4BQ) was used instead of 0.4 g (1.8 mmol) of BHT to obtain a white solid halogenated polymer with a yield of 97%. Evaluation results of the obtained halogenated polymer are shown in Table 3.

Example 18

The same operation as in Example 1 was conducted except that 0.01 g (0.06 mmol) of triethyl phosphite (TEP) was used instead of 0.4 g (1.8 mmol) of BHT to obtain a white solid halogenated polymer with a yield of 96%. Evaluation results of the obtained halogenated polymer are shown in Table 3.

Example 19

The same operation as in Example 1 was conducted except that 0.01 g (0.03 mmol) of trihexyl phosphite (THP) was used instead of 0.4 g (1.8 mmol) of BHT to obtain a white solid halogenated polymer with a yield of 96%. Evaluation results of the obtained halogenated polymer are shown in Table 4.

Example 20

The same operation as in Example 1 was conducted except that 0.01 g (0.02 mmol) of tris(1,1,1-hexafluoro-2-propyl) phosphite (THFPP) was used instead of 0.4 g (1.8 mmol) of BHT to obtain a white solid halogenated polymer with a yield of 97%. Evaluation results of the obtained halogenated polymer are shown in Table 4.

Example 21

The same operation as in Example 1 was conducted except that 0.01 g (0.03 mmol) of triphenyl phosphite (TPPI) was used instead of 0.4 g (1.8 mmol) of BHT to obtain a white solid halogenated polymer with a yield of 96%. Evaluation results of the obtained halogenated polymer are shown in Table 4.

Example 22

The same operation as in Example 1 was conducted except that 0.002 g (0.006 mmol) of tris(2-methylphenyl) phosphite (T2MPP) was used instead of 0.4 g (1.8 mmol) of BHT to obtain a white solid halogenated polymer with a yield of 97%. Evaluation results of the obtained halogenated polymer are shown in Table 4.

Example 23

The same operation as in Example 1 was conducted except that 0.002 g (0.006 mmol) of tris(4-methylphenyl) phosphite (T4MPP) was used instead of 0.4 g (1.8 mmol) of BHT to obtain a white solid halogenated polymer with a yield of 96%. Evaluation results of the obtained halogenated polymer are shown in Table 4.

Example 24

The same operation as in Example 1 was conducted except that 0.002 g (0.003 mmol) of tris(4-nonylphenyl) phosphite (T4NPP) was used instead of 0.4 g (1.8 mmol) of BHT to obtain a white solid halogenated polymer with a yield of 95%. Evaluation results of the obtained halogenated polymer are shown in Table 4.

Example 25

The same operation as in Example 1 was conducted except that 0.002 g (0.003 mmol) of pentaerythritolbis(2,4-di-tert-butylphenylphosphite) (PEBPP) was used instead of 0.4 g (1.8 mmol) of BHT to obtain a white solid halogenated polymer with a yield of 96%. Evaluation results of the obtained halogenated polymer are shown in Table 5.

Example 26

The same operation as in Example 1 was conducted except that 0.02 g (0.12 mmol) of diphenylamine (DPA) was used instead of 0.4 g (1.8 mmol) of BHT to obtain a white solid halogenated polymer with a yield of 96%. Evaluation results of the obtained halogenated polymer are shown in Table 5.

Example 27

The same operation as in Example 1 was conducted except that 0.02 g (0.22 mmol) of N,N-diethylhydroxylamine (DEHA) was used instead of 0.4 g (1.8 mmol) of BHT to obtain a white solid halogenated polymer with a yield of 96%. Evaluation results of the obtained halogenated polymer are shown in Table 5.

Example 28

The same operation as in Example 1 was conducted except that 0.02 g (0.13 mmol) of 2,2,6,6-tetramethylpiperidin-1-oxyl (TEMPO) was used instead of 0.4 g (1.8 mmol) of BHT to obtain a white solid halogenated polymer with a

yield of 96%. Evaluation results of the obtained halogenated polymer are shown in Table 5.

Example 29

The same operation as in Example 1 was conducted except that 0.02 g (0.13 mmol) of ammonium nitrosophenylhydroxylamine (ANPHA) was used instead of 0.4 g (1.8 mmol) of BHT to obtain a white solid halogenated polymer with a yield of 96%. Evaluation results of the obtained halogenated polymer are shown in Table 5.

Example 30

The same operation as in Example 1 was conducted except that 0.02 g (0.13 mmol) of 2-benzimidazolethiol (2BIT) was used instead of 0.4 g (1.8 mmol) of BHT to obtain a white solid halogenated polymer with a yield of 96%. Evaluation results of the obtained halogenated polymer are shown in Table 5.

Example 31

The same operation as in Example 1 was conducted except that 0.02 g (0.10 mmol) of phenothiazine (PT) was used instead of 0.4 g (1.8 mmol) of BHT to obtain a white solid halogenated polymer with a yield of 96%. Evaluation results of the obtained halogenated polymer are shown in Table 6.

Example 32

The same operation as in Example 1 was conducted except that 0.02 g (0.04 mmol) of didodecyl 3,3'-thiodipropionate (3,3'TDPDD) was used instead of 0.4 g (1.8 mmol) of BHT to obtain a white solid halogenated polymer with a yield of 96%. Evaluation results of the obtained halogenated polymer are shown in Table 6.

Example 33

The same operation as in Example 1 was conducted except that 0.02 g (0.03 mmol) of dioctadecyl 3,3'-thiodipropionate (3,3'TDPDOD) was used instead of 0.4 g (1.8 mmol) of BHT to obtain a white solid halogenated polymer with a yield of 96%. Evaluation results of the obtained halogenated polymer are shown in Table 6.

Comparative Example 1

The same operation as in Example 1 was conducted except that no BHT was added to obtain a brown solid halogenated polymer with a yield of 92%. Evaluation results of the obtained halogenated polymer are shown in Table 7.

Comparative Example 2

The same operation as in Example 1 was conducted except that 0.2 g (1.49 mmol) of t-butylbenzene (TBB) was used instead of 0.4 g (1.8 mmol) of BHT to obtain a brown solid halogenated polymer with a yield of 95%. Evaluation results of the obtained halogenated polymer are shown in Table 7.

Comparative Example 3

The same operation as in Example 1 was conducted except that 0.4 g (1.2 mmol) of triphenyl phosphate (TPPA) was used instead of 0.4 g (1.8 mmol) of BHT to obtain a brown solid halogenated polymer with a yield of 95%. Evaluation results of the obtained halogenated polymer are shown in Table 7.

Table 1

| | | Ex. 1 | Ex. 2 | Ex. 3 | Ex. 4 | Ex. 5 | Ex. 6 |
|---|---|---|---|---|---|---|---|
| Radical scavenger | | BHT | PTBP | TDBPP | HQ | 4OMeP | PTBP |
| Amount added | g | 0.4 | 0.2 | 0.02 | 0.02 | 0.02 | 0.02 |
| Weight average molecular weight | | 12,000 | 12,000 | 13,000 | 11,000 | 13,000 | 12,000 |
| Bromide ion content | ppm | 220 | 180 | 490 | 300 | 290 | 250 |

(continued)

| | | Ex. 1 | Ex. 2 | Ex. 3 | Ex. 4 | Ex. 5 | Ex. 6 |
|---|---|---|---|---|---|---|---|
| 3% weight loss temperature | °C | 376 | 379 | 380 | 373 | 378 | 377 |
| Color difference from white | | 29 | 14 | 9 | 28 | 11 | 21 |
| Average primary particle size (D50) | µm | 8 | 8 | 9 | 7 | 7 | 7 |

Table 2

| | | Ex. 7 | Ex. 8 | Ex. 9 | Ex. 10 | Ex. 11 | Ex. 12 |
|---|---|---|---|---|---|---|---|
| Radical scavenger | | 4tBuC | TBHQ | 6tBu4,6DMP | 2,6DtBuP | 2tBu4OMeP | 2,5DtBuHQ |
| Amount added | g | 0.02 | 0.02 | 0.02 | 0.02 | 0.02 | 0.02 |
| Weight average molecular weight | | 11,000 | 12,000 | 13,000 | 12,000 | 13,000 | 12,000 |
| Bromide ion content | ppm | 260 | 280 | 220 | 200 | 210 | 250 |
| 3% weight loss temperature | °C | 372 | 375 | 379 | 377 | 380 | 376 |
| Color difference from white | | 19 | 14 | 13 | 13 | 10 | 9 |
| Average primary particle size (D50) | µm | 7 | 8 | 7 | 8 | 7 | 8 |

Table 3

| | | Ex. 13 | Ex. 14 | Ex. 15 | Ex. 16 | Ex. 17 | Ex. 18 |
|---|---|---|---|---|---|---|---|
| Radical scavenger | | 3,6DHN | 2,2'MB(6CHPC) | PETP | 1,4BQ | 2tBu1,4BQ | TEP |
| Amount added | g | 0.02 | 0.02 | 0.02 | 0.02 | 0.02 | 0.01 |
| Weight average molecular weight | | 12,000 | 12,000 | 13,000 | 11,000 | 11,000 | 13,000 |
| Bromide ion content | ppm | 260 | 230 | 300 | 350 | 280 | 600 |
| 3% weight loss temperature | °C | 377 | 374 | 377 | 373 | 371 | 379 |
| Color difference from white | | 18 | 20 | 22 | 26 | 20 | 15 |
| Average primary particle size (D50) | µm | 8 | 9 | 8 | 8 | 9 | 10 |

Table 4

| | | Ex. 19 | Ex. 20 | Ex. 21 | Ex. 22 | Ex. 23 | Ex. 24 |
|---|---|---|---|---|---|---|---|
| Radical scavenger | | THP | THFPP | TPPI | T2MPP | T4MPP | T4NPP |
| Amount added | g | 0.01 | 0.01 | 0.01 | 0.002 | 0.002 | 0.002 |
| Weight average molecular weight | | 13,000 | 12,000 | 13,000 | 12,000 | 12,000 | 11,000 |
| Bromide ion content | ppm | 420 | 780 | 500 | 300 | 480 | 360 |
| 3% weight loss temperature | °C | 381 | 374 | 381 | 375 | 378 | 373 |
| Color difference from white | | 10 | 16 | 10 | 19 | 14 | 14 |
| Average primary particle size (D50) | µm | 8 | 9 | 9 | 8 | 9 | 9 |

Table 5

| | | Ex. 25 | Ex. 26 | Ex. 27 | Ex. 28 | Ex. 29 | Ex. 30 |
|---|---|---|---|---|---|---|---|
| Radical scavenger | | PEBPP | DPA | DEHA | TEMPO | ANPHA | 2BIT |

(continued)

| | | Ex. 25 | Ex. 26 | Ex. 27 | Ex. 28 | Ex. 29 | Ex. 30 |
|---|---|---|---|---|---|---|---|
| Amount added | g | 0.002 | 0.02 | 0.02 | 0.02 | 0.02 | 0.02 |
| Weight average molecular weight | | 12,000 | 10,000 | 11,000 | 12,000 | 12,000 | 12,000 |
| Bromide ion content | ppm | 970 | 460 | 360 | 380 | 250 | 70 |
| 3% weight loss temperature | °C | 374 | 374 | 372 | 373 | 374 | 374 |
| Color difference from white | | 12 | 25 | 22 | 27 | 19 | 22 |
| Average primary particle size (D50) | µm | 9 | 8 | 8 | 9 | 8 | 9 |

Table 6

| | | Ex. 31 | Ex. 32 | Ex. 33 |
|---|---|---|---|---|
| Radical scavenger | | PT | 3,3'TDPDD | 3,3'TDPDOD |
| Amount added | g | 0.02 | 0.02 | 0.02 |
| Weight average molecular weight | | 12,000 | 12,000 | 12,000 |
| Bromide ion content | ppm | 300 | 600 | 870 |
| 3% weight loss temperature | °C | 376 | 375 | 376 |
| Color difference from white | | 23 | 18 | 22 |
| Average primary particle size (D50) | µm | 9 | 8 | 8 |

Table 7

| | | Comp. Ex. 1 | Comp. Ex. 2 | Comp. Ex. 3 |
|---|---|---|---|---|
| Additive | | --- | TBB | TPPA |
| Amount added | g | --- | 0.2 | 0.4 |
| Weight average molecular weight | | 23,000 | 18,000 | 20,000 |
| Bromide ion content | ppm | 6700 | 8200 | 8300 |
| 3% weight loss temperature | °C | 351 | 348 | 350 |
| Color difference from white | | 103 | 112 | 104 |
| Average primary particle size (D50) | µm | 270 | 248 | 263 |

As described above, the halogenated polymer of the present invention has high heat resistance and high whiteness as compared with a known halogen-containing polymer.

The present invention has been described in detail with reference to specific embodiments, but, it is obvious for the person skilled in the art that various changes and modifications are possible without departing from the intension and the scope of the present invention.

The entire disclosure of Japanese Patent Application No. 2022-130888 filed on August 19, 2022 including specification, Claims, drawings and summary is incorporated herein by reference in its entirety.

## Claims

**1.** A halogenated polymer represented by the following formula (1), containing bromide ions:

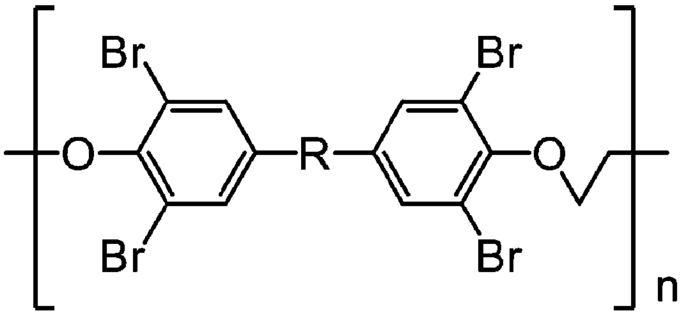

(1)

wherein R is a C1-C6 alkylene group, -S- or -$SO_2$-, and n is a real number, which has a bromide ion content of 1 to 2,000 ppm.

2. The halogenated polymer according to Claim 1, wherein a 3 wt% weight loss temperature is 370°C or higher at a temperature-raising rate of 10°C/min.

3. The halogenated polymer according to Claim 1, wherein a color difference D from white (R:G:B=255:255:255) of the halogenated polymer calculated based on the Euclidean distance of the following formula using a color difference meter, is 33 or less:

$$\text{color difference D} = \sqrt{(255-R)^2 + (255-G)^2 + (255-B)^2}$$

4. The halogenated polymer according to Claim 1, which has an average primary particle size (D50) of 1 to 50 μm.

5. A method for producing the halogenated polymer as defined in Claim1, which comprises heating a mixture containing a compound represented by the following formula (2), a compound represented by the following formula (3), a base, a radical scavenger and a solvent at 110 to 150°C with stirring:

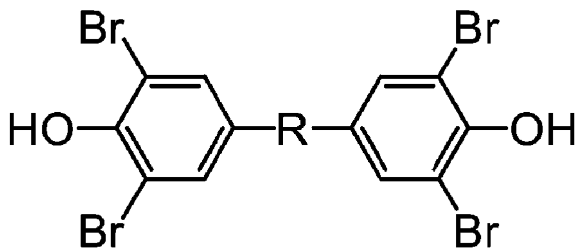

(2)

wherein R is a C1-C6 alkylene group, -S- or -$SO_2$-;

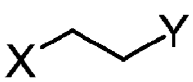

(3)

wherein X and Y are a halogen atom.

6. The production method according to Claim 5, wherein an amount of the radical scavenger used is 0.001 to 10 parts by mass per 100 parts by mass of the compound represented by the formula (2).

7. The production method according to Claim 5, wherein the radical scavenger is at least one member selected from the group consisting of a phenol-based radical scavenger, a quinone-based radical scavenger, a phosphite-based radical scavenger, an amine-based radical scavenger and a sulfur-based radical scavenger.

**INTERNATIONAL SEARCH REPORT**

International application No.
**PCT/JP2023/030012**

**A. CLASSIFICATION OF SUBJECT MATTER**

***C08G 65/40***(2006.01)i
FI: C08G65/40

According to International Patent Classification (IPC) or to both national classification and IPC

**B. FIELDS SEARCHED**

Minimum documentation searched (classification system followed by classification symbols)

C08G65/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2019-77857 A (TOSOH CORP.) 23 May 2019 (2019-05-23) claims | 1-7 |
| A | JP 2021-138891 A (TOSOH CORP.) 16 September 2021 (2021-09-16) claims | 1-7 |
| A | JP 9-100378 A (GENERAL ELECTRIC CO.) 15 April 1997 (1997-04-15) claims | 1-7 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 September 2023** | **03 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/030012**

| Patent document cited in search report | Publication date (day/month/year) | Patent family member(s) | Publication date (day/month/year) |
|---|---|---|---|
| JP 2019-77857 A | 23 May 2019 | US 2020/0199296 A1<br>claims<br>EP 3650483 A1<br>CN 110914338 A | |
| JP 2021-138891 A | 16 September 2021 | (Family: none) | |
| JP 9-100378 A | 15 April 1997 | US 5559172 A<br>claims<br>EP 742256 A1<br>CN 1137544 A<br>KR 10-1996-0041272 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S51117737 A
- JP S568809 B
- JP S53128656 A
- JP S621973 B
- JP 2019077857 A
- JP 2022130888 A